Europäisches Patentamt

European Patent Office

Office européen des brevets

(19)

(11) EP 0 711 612 A1

(12) **EUROPEAN PATENT APPLICATION**

(43) Date of publication:
15.05.1996 Bulletin 1996/20

(51) Int Cl.$^6$: **B09C 1/06**, E02D 3/11

(21) Application number: 95307342.6

(22) Date of filing: 16.10.1995

(84) Designated Contracting States:
BE CH DE ES FR GB IT LI NL SE

(30) Priority: 02.11.1994 GB 9422058

(71) Applicant: **British Nuclear Fuels PLC**
**Risley Warrington Cheshire, WA3 6AS (GB)**

(72) Inventors:
• **Richardson, Stephen**
**c/o British Nuclear Fuels plc**
**Seascale, Cumbria CA20 1PG (GB)**

• **Eilbeck, Adam Bruce**
**Seascale, Cumbria (GB)**

(74) Representative: **Goddard, David John et al**
**HARRISON GODDARD FOOTE**
**1 Cottage Road**
**Leeds LS6 4DD (GB)**

(54) **A method of producing a barrier to pollutant movement**

(57)   A method of in-situ heating of a ground soil having pollutants therein which it is desired to immobilise in the soil or to prevent or minimise migration thereof is described. The method comprises the steps of placing at least the reactants to produce a thermite-type reaction in said ground soil, said thermite-type reaction generating sufficient heat to promote at least partial ceramification of said soil adjacent said thermite-type reaction.

FIG.2

## Description

The present invention relates to a method of producing a barrier in a landfill site or otherwise minimising the migration of pollutants in the ground.

It is well known for pollutants such as toxic heavy metal ions or nuclides for example to migrate through the ground due to the action of water movement. Pollutants may move for example through clay soils. The problem arises or example in nuclear and toxic metal disposal sites, or in contaminated areas. Where these problems exist, there is a requirement for remediation or containment of such undesirable pollutants in the ground area in which they lie.

One possible remedy is to use a hydrological barrier to ground water so as to reduce transport of the pollutant. In many cases, it is not practicable to excavate contaminated areas due to the probability of secondary contamination. Therefore, it is desirable to emplace barriers without significant disturbance of the ground. An example of this is in-situ vitrification of the ground as practised in the United States of America by the passage of very high electrical currents through the ground to generate heat. However, such techniques are extremely expensive to employ.

It is an object of the present invention to provide an econimic method of promoting at least partial ceramification of a contaminated ground soil so as to prevent or minimise the migration of pollutants out of a contaminated area or through a barrier of at least partially ceramified soil.

According to the present invention there is provided a method of in-situ heating of a ground soil having pollutants therein which it is desired to immobilise in the soil or to prevent or minimise migration thereof, the method comprising the steps of placing at least the reactants to produce a thermite-type reaction in said ground soil, said thermite-type reaction generating sufficient heat to promote at least partial ceramification of said soil adjacent said thermite-type reaction.

The thermite reaction is well known and in one embodiment involves the reaction between aluminium metal and iron oxide to generate metallic iron and alumina with evolution of large quantities of heat. The basic thermite chemical reaction may be written:

$$8Al + 3Fe_3O_4 \rightarrow 9Fe - 4Al_2O_3$$

Under ideal conditions, temperatures in excess of 3000°C may be generated by the reaction. The thermite reaction has been used for the welding of railway lines; the reaction being used to supply both heat and molten iron. However, other variants of the thermite reaction exist, utilising copper oxide and aluminium metal, which provide greater heat output and more geochemically stable products.

The thermite-type reaction is a particularly advantageous means of generating heat since it is an exothermic solid-solid reaction with little or no evolution of gas from the thermite reaction itself. Thus, there is little potential for explosive reactions occurring. However, there is the possibility of steam reactions occurring where the ground is very wet and suitable precautions such as the provision of bore holes adjacent the reaction zone for the release of steam may be required.

Two main applications of the method of the present invention are envisaged. The first is to generate an at least partially ceramified soil wall around a contaminated ground site for example, and thus, prevent or minimise the migration of pollutants from the site through the ceramified wall into the surrounding soil. The second main application is to heat a contaminated volume of soil so as to promote at least partial ceramification of the contaminated soil and thereby to "lock" the pollutants into the at least partially ceramified soil.

The reactants may be placed in the ground in a suitable container. such suitable containers may include plastics materials and metals.

The shape of the container may be chosen so as to produce the desired geometry of heating effect from the reactants. For example, containers in the form of tubes sunk into pre-drilled bore holes may be employed at a spacing so as to ensure overlapping of heaning profiles which will produce a continuous wall of at least partially ceramified soil over a predetermined distance; such as to produce a "curtain wall" around a polluted area.

Other materials in addition to the basic thermite reactants may be employed so as to modify the reaction and/or the effect achieved by the reaction. For example, other materials may be mixed with the reactants so as to slow down the reaction or to produce different reaction products for specific purposes. Alternatively, additional materials may be used to produce a jacket around the thermite reactants. In this latter regard, silica may be employed to assist heat transfer to the soil and to promote vitrification of the surrounding soil. Such jackets may, for example, be produced by containers having separate, generally concentric walls.

It is also possible to include layers of materials to act as reaction brakes. For example, an outer layer of aluminium oxide may be employed to stop the reaction at a predetermined distance from the centre of the reaction.

Oxygen donor materials may be employed to promote oxidation of the reaction products and/or the surrounding material.

As stated above, it is an object of the present invention to promote at least partial ceramification of the surrounding soil. However, vitrification of the soil may also occur immediately adjacent the thermite reaction zone where the temperatures are greatest. Such vitrification may be promoted by the inclusion with the thermite reactant charge quantities of silicon or silica to promote vitrification. Advantages of such a system where vitrification is promoted include improved properties relating to the prevention or restriction of water flow within the ground and the generation of a composite corrosion resistant barrier.

An advantage of the present invention is that the polluted soil, such as clay soil for example, is substantially undisturbed prior to treatment.

In order that the present invention may be more fully understood, examples will now be described by way of illustration only with reference to the accompanying drawings, of which:

Figure 1 shows a schematic cross section trough a clay soil ground section having a container of thermite reactants therein, and a generalised graph showing temperature variation around the container;

Figure 2 shows a schematic cross section through a ground section in plan showing the formation of a wall around a contaminated area; and

Figure 3 which shows a similar section to that of Figure 2 but where the whole of the area has been treated so as to retain the contaminants within the treated soil per se.

Referring now to the drawings and where the same features are denoted by common reference numerals.

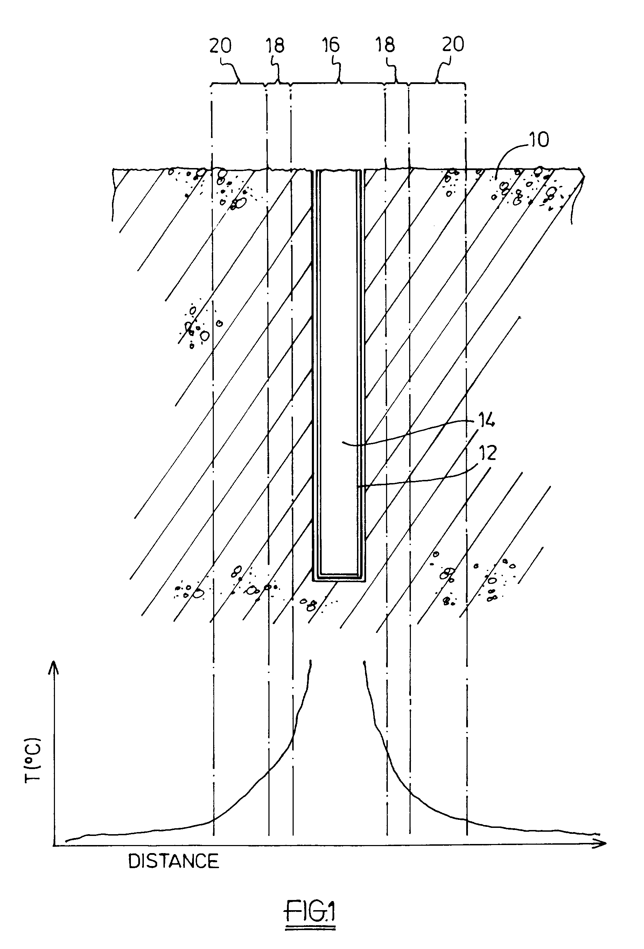

Figure 1 shows a schematic cross section through a ground section of a clay soil 10 is shown having a tube 12 filled with thermite reactants 14 comprising aluminium powder and iron oxide powder and suitable ignition promoting materials such as magnesium ribbon and/or electrically heated nichrome wire. The reaction may be initiated by electrical means indicated by the wire 15. As the reaction proceeds, the clay soil immediately adjacent the reactants is subjected to the highest temperatures and becomes vitrified in the cone indicated at 16. At a greater distance from the reaction, the temperature reached is less and ceramification of the soil occurs in the zone indicated at 18. As the distance from the reaction increases, the temperature to which the soil is subjected decreases and, although ceramification does not occur in the zone denoted at 20, the temperature reached is sufficient to cause an irreversible structural change to the clay which results in heavy metal ions and metal nuclides being retained in the clay structure and being prevented from migrating through the clay soil (see our co-pending British patent application number GB9422062.1 of even filing date herewith). Outside of the zone denoted at 20, the clay soil althrough perhaps dried, does not suffer any permanent change.

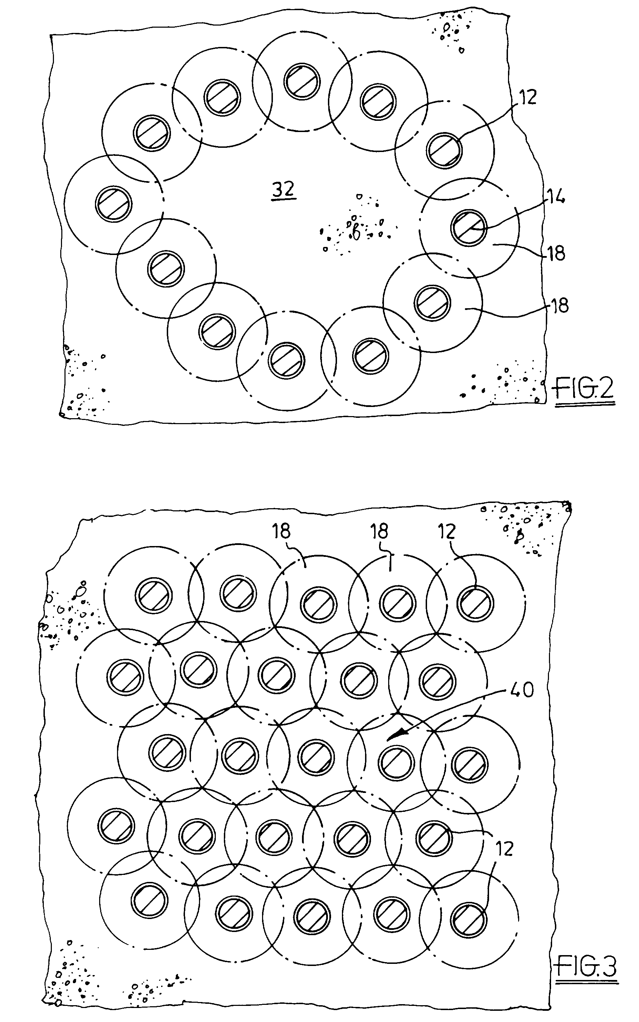

Figure 2 shows a schematic cross section in plan through a ground section 30 where a barrier wall is produced around a localised area 32 having contaminants therein. Tubes 12 having reactants similar to that shown in Figure 1 are sunk into the ground at a pitch such that the ceramified zones 18 overlap each other (no reference is made in Figure 2 to vitrified zones which may or may not be formed depending upon the constitution of the reactants 14 in the tubes 12). Contaminants in the area 32 are thus prevented from moving through the barrier formed by the overlapping ceramified zones 18.

Figure 3 shows a section similar to that of Figure 2 but where the tubes 12 are placed at a pitch where all of the soil within an area 40 is subjected to temperatures which cause ceramification of the clay soil within the boundary of the area to be treated.

**Claims**

1. A method of in-situ heating of a ground soil having pollutants therein which it is desired to immobilise in the soil or to prevent or minimise migration thereof, the method being characterised by comprising the steps of placing at least the reactants to produce a thermite-type reaction in said ground soil, said thermite-type reaction generating sufficient heat to promote at least partial ceramification of said soil adjacent said thermite-type reaction.

2. A method according to claim 1 wherein said reactants are placed in said ground soil in a container.

3. A method according to claim 1 wherein a wall of at least partially ceramified soil is formed around a contaminated area.

4. A method according to either claim 1 or claim 2 wherein the whole volume of soil within a contaminated area is at least partially ceramified.

5. A method according to any one preceding claim wherein at least a part of said heated soil is vitrified.

6. A method according to any one preceding claim wherein said reactants further contain materials to promote vitrification of the soil.

7. A method according to any one preceding claim wherein said soil is a clay soil.

FIG.1

FIG.2

FIG.3

**European Patent Office**

## EUROPEAN SEARCH REPORT

Application Number

EP 95 30 7342

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | GB-A-2 096 209 (U. S. DEPARTEMENT OF ENERGY) | 1-5 | B09C1/06 E02D3/11 |
| Y | * page 1, line 3 - line 6 * <br> * page 1, line 47 - page 2, line 31 * <br> * page 2, line 53 - line 54 * <br> * figure 1 * | 6,7 | |
| Y <br> A | US-A-5 114 277 (M. MURPHY) <br> * column 3, line 23 - line 59 * <br> * column 6, line 30 - line 37 * <br> * figures 1-3 * | 6 <br> 1,3,5 | |
| Y | US-A-2 616 847 (W. GINELL) <br> * claim 1 * | 7 | |
| A | DATABASE WPI <br> Section Ch, Week 8614 <br> Derwent Publications Ltd., London, GB; <br> Class H01, AN 86-092964 <br> & SU-A-1 178 895 (ORENBURGNEFT PROD) , 15 September 1985 <br> * abstract * | 1 | |
| A | DATABASE WPI <br> Section Ch, Week 8318 <br> Derwent Publications Ltd., London, GB; <br> Class L02, AN 83-43875K <br> & SU-A-939 634 (WATER ENG SOIL INPR) , 30 June 1982 <br> * abstract * | 1 | TECHNICAL FIELDS SEARCHED (Int.Cl.6) <br><br> B09C <br> E02D <br> G21F |
| A | WO-A-94 04761 (L. CIRCEO) <br> * page 16, line 11 - page 20, line 31 * <br> * page 21, line 32 - page 22, line 35 * <br> * figures 5-7,9 * | 1,3-5 | |

The present search report has been drawn up for all claims

| Place of search | Date of completion of the search | Examiner |
|---|---|---|
| THE HAGUE | 13 February 1996 | Laval, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)